(19) Europäisches Patentamt
European Patent Office
Office européen des brevets

(11) Veröffentlichungsnummer: **0 093 241**
**B1**

(12) # EUROPÄISCHE PATENTSCHRIFT

(45) Veröffentlichungstag der Patentschrift: **10.12.86**

(51) Int. Cl.[4]: **C 09 D 5/44**, C 09 D 3/58, C 09 D 3/72, C 25 D 13/06

(21) Anmeldenummer: **83101645.6**

(22) Anmeldetag: **21.02.83**

(54) **Selbstvernetzendes, hitzehärtbares Bindemittel.**

(30) Priorität: **29.04.82 DE 3215891**

(43) Veröffentlichungstag der Anmeldung: **09.11.83 Patentblatt 83/45**

(45) Bekanntmachung des Hinweises auf die Patenterteilung: **10.12.86 Patentblatt 86/50**

(84) Benannte Vertragsstaaten: **AT BE CH DE FR GB IT LI NL SE**

(56) Entgegenhaltungen: **DE - A - 1 546 848**

(73) Patentinhaber: **BASF Lacke + Farben Aktiengesellschaft, Max-Winkelmann-Strasse 80, D-4400 Münster (DE)**

(72) Erfinder: **Geist, Michael, Dipl.-Chem. Dr., Rubensstrasse 251, D-4400 Münster (DE)**

(74) Vertreter: **Habbel, Hans-Georg, Dipl.-Ing., Postfach 3429 Am Kanonengraben 11, D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein selbstvernetzendes, hitzehärtbares Bindemittel, insbesondere für Elektrotauchlacke, auf der Basis eines organischen Kunstharzes, das primäre und/oder sekundäre und gegebenenfalls auch tertiäre Aminogruppen und veresterte Carboxylgruppen enthält und durch partielle oder vollständige Neutralisation mit Säuren wasserverdünnbar ist, wobei die veresterten Carboxylgruppen in der Alkoholkomponente durch einen Substituenten, der einen negativen induktiven Effekt bewirkt, aktiviert sind.

Aus der DE-OS 2 936 411 ist ein Lacküberzugsmittel bekannt, das ein Kunstharz enthält, das primäre und/oder sekundäre und gegebenenfalls auch tertiäre Aminogruppen sowie endständige veresterte Carboxylgruppen enthält, wobei die Estergruppen in neutralem wässrigem Medium weitgehend stabil sind, jedoch in basischem Medium bei erhöhten Temperaturen gegenüber den primären und/oder sekundären Aminogruppen des Kunstharzes reaktionsfähig sind. Gemäss dem Beispiel der DE-OS 2 936 411 wird 25 Minuten bei 180°C eingebrannt.

Als Alkoholkomponente der Carboxylestergruppen werden bei diesem bekannten Kunstharz ausschliesslich Monoalkohole verwendet, die 1 bis 18, bevorzugt 1 bis 6 Kohlenstoffatome im Molekül enthalten. Besonders bevorzugt werden niedrigsiedende Alkohole mit einem Siedepunkt unter 140°C. Die Reaktionsfähigkeit der Ester wird durch die Erhöhung der elektrophilen Aktivität der Carboxylgruppe gesteigert. Als besonders geeignet wird der Einbau von Methyl-, Ethyl- und/oder Propylestern der Milchsäure bzw. der Dimethylolpropionsäure bezeichnet. Die Verwendung von Monoalkoholen als Veresterungskomponente bringt den Nachteil mit sich, dass die erhaltenen Carboxylestergruppen trotz ihrer Aktivierung in der Carbonsäurekomponente nicht ausreichend reaktionsfähig sind.

Aus der gattungsbildenden DE-OS 1 546 848 ist ein Verfahren zum Herstellen von Überzügen bekannt, bei dem aus wässrigen Lösungen bzw. wässrigen Dispersionen stickstoffbasische kationische Bindemittel abgeschieden werden. Bei den Bindemitteln handelt es sich um Acrylat-Mischpolymerisate. Unter einer Vielzahl von für die Herstellung der Acrylat-Copolymeren geeigneten Monomeren werden zufällig 4 Monomere genannt, die β-Hydroxyalkylestergruppen enthalten und somit in der Alkoholkomponente aktiviert sind. Die aus der DE-OS 1 546 848 bekannten Überzugsmittel führen zu Überzügen mit nicht vollständig zufriedenstellenden Eigenschaften in bezug auf den Korrosionsschutz. Der Erfindung liegt die Aufgabe zugrunde, ein Bindemittel mit verbesserten Eigenschaften im Hinblick auf die Herstellung, die Qualität der resultierenden Überzüge und dort insbesondere des Korrosionsschutzes sowie die Einbrennbedingungen zu schaffen.

Überraschenderweise wurde gefunden, dass diese Aufgabe gelöst wird durch ein Bindemittel der eingangs genannten Art, das dadurch gekennzeichnet ist, dass als hitzehärtbare Bindemittel ein Epoxidharz oder ein Polyurethanharz, das hergestellt worden ist durch Umsetzung einer mindestens 2 Isocyanatgruppen enthaltenden Verbindungen mit einer Verbindung, die 2 gegenüber Isocyanatgruppen reaktive Gruppen und mindestens eine aktivierte Carboxylestergruppe trägt, zu einem Zwischenprodukt mit endständigen Isocyanatgruppen und Umsetzung dieser Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol, eingesetzt ist und die veresterten Carboxylgruppen β-Hydroxyalkylestergruppen oder Carbalkoxymethylestergruppen sind.

Die erfindungsgemässen Bindemittel bieten folgende Vorteile: Die verwendeten Alkoholkomponenten, d.h. im Falle der β-Hydroxyalkylester die Diole und im Falle der Carbalkoxymethylester die Hydroxyessigsäureester, sind besonders günstig austretende Gruppen, wodurch eine effektive Aktivierung der Carboxylestergruppen erreicht wird. Dies wiederum führt zu einer wirksamen Vernetzung im endgültig resultierenden Film. In dieser Hinsicht sind die erfindungsgemäss eingesetzten Alkoholkomponenten den Monoalkoholen überlegen, und hierdurch können bei sonst gleichen Bedingungen die Einbrenntemperaturen oder -zeiten reduziert werden. Wenn zur Veresterung der Carboxylgruppen Monoalkohole wie Methyl-, Ethyl- oder Butylalkohol eingesetzt werden, läuft die Amidierungsreaktion zur Vernetzung der Bindemittel nicht in ausreichendem Masse oder zu langsam ab. Die Vernetzungsrate ist in diesem Fall geringer, und der eingebrannte Überzug ist gegenüber Lösungsmitteln nicht ausreichend beständig. Weiterhin können die erfindungsgemässen in der Alkoholkomponente aktivierten Carboxylestergruppen günstiger hergestellt werden als die Monoalkohole enthaltenden Estergruppen. So können die β-Hydroxylakylestergruppen durch Umsetzung einer Carboxylgruppe mit einer Epoxidverbindung erhalten werden, und die Carbalkoxymethylestergruppen können durch Umsetzung eines Carbonsäuresalzes mit einem Halogenessigsäureester erhalten werden. In beiden Fällen handelt es sich um Reaktionen, die unter milden Bedingungen durchgeführt werden können. Hierdurch werden Nebenreaktion, wie beispielsweise Umesterungen, vermieden, und es entsteht ein einheitlicheres Produkt. Ein weiterer Vorteil der erfindungsgemässen Bindemittel liegt darin, dass die beim Einbrennen freigesetzten Verbindungen, nämlich die genannten Diole und Hydroxyessigsäureester, besonders gute Verlaufmittel sind, durch die Überzüge mit einer sehr guten Oberfläche erzielt werden. So ist beispielsweise der Hydroxyessigsäureethylester als solcher bereits als Verlaufmittel bekannt, und durch die Erfindung wird es möglich gemacht, diese Verbindung beim Einbrennen freizusetzen, wodurch ein besonders guter Effekt erzielt wird. Im Gegensatz dazu besteht bei der Freisetzung niedrigsiedender Alkohole die Gefahr von sogenannten Kochern und anderen Filmstörungen im Überzug.

Das erfindungsgemässe Kunstharz wird besonders bevorzugt als Bindemittel für kathodisch abscheidbare Elektrotauchlacke verwendet. Hierbei kann es auch vorteilhaft in Kombination mit einem feinteiligen, festen Harz nach dem sogenannten EPC-Verfahren (elektro powder coating-Verfahren) abgeschieden werden. Das Kunstharz ist aber auch als Bindemittel für konventionelle, lösungsmittelhaltige Einbrennlacke und für Pulverlacke geeignet.

Die erhaltenen Überzugsmittel können für den Fachmann selbstverständlich zusätzlich Pigmente, Füllstoffe, Vernetzungskatalysatoren, Korrosionsinhibitoren sowie weitere bekannte Lackhilfsmittel enthalten.

Während des Einbrennens reagieren nun die β-Hydroxyalkylestergruppen bzw. die Carbalkoxymethylestergruppen mit den primären und/oder sekundären Aminogruppen unter Ausbildung von Amidbindungen. Der basische Stickstoff der Aminogruppe wird also in einen pH-neutralen Amidstickstoff im eingebrannten Überzug überführt. Dieser enthält damit nur wenige basische Störstellen. Der Vernetzungsmechanismus kann im Prinzip durch folgende Reaktionschemen beschrieben werden:

a. Vernetzung durch Reaktion der Aminogruppe mit der β-Hydroxyalkylestergruppe:

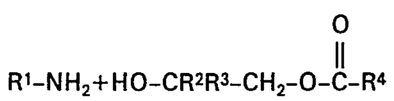

↓ ΔT, gegebenenfalls Katalysator

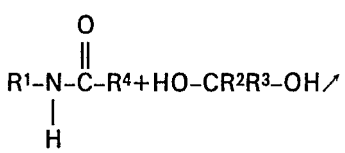

$R^1$, $R^4$ = Bindemittelmolekülrest
$R^2$, $R^3$ = H, Alkyl- oder substituierter Alkylrest

b. Vernetzung durch Reaktion der Aminogruppe mit der Carbalkoxymethylestergruppe:

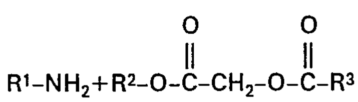

↓ ΔT, gegebenenfalls Katalysator

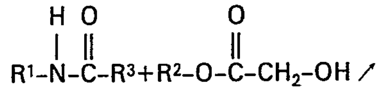

$R^1$, $R^3$ = Bindemittelmolekülrest
$R^2$ = Alkyl

Beim Einbrennen werden praktisch keine Aminogruppen abgespalten und somit die Abluftprobleme reduziert. Die abgespaltenen Diole bzw. Hydroxyessigsäureester weisen vorzugsweise einen Siedepunkt auf, der in der Nähe der Einbrenntemperatur liegt, so dass sie während des Einbrennvorganges als besonders wirksame Verlaufsmittel wirken.

Die während des Einbrennens entstehende Amidbindung wirkt sich sehr vorteilhaft auf die Haftung des Films, insbesondere auf Metallsubstraten, aus. Ebenfalls wird hierdurch die Elastizität des Filmes gesteigert. Dieser Vernetzungsmechanismus bedingt eine hohe Beständigkeit des Lackfilms gegen Lösungsmittel, Alkalien und Salzsprühnebel. Bereits auf nicht vorbehandeltem Eisenblech bilden die Filme auch ohne Korrosionsschutzinhibitoren sehr resistente Überzüge aus.

Vorteilhaft enthält das Kunstharz 1 bis 5 primäre und/oder sekundäre Aminogruppen und 1 bis 5 aktivierte Estergruppen pro 1000 Molekulargewichtseinheiten.

Das Äquivalenzverhältnis zwischen den primären und/oder sekundären Aminogruppen und den aktivierten Carboxylestergruppen beträgt vorteilhaft 2:1 bis 1:2, wobei ein Äquivalenzverhältnis von etwa 1:1 besonders bevorzugt wird.

Zur Herstellung der erfindungsgemässen selbstvernetzenden hitzehärtbaren Bindemittel erweisen sich epoxidgruppenhaltige Harze mit vorzugsweise endständigen Epoxidgruppen aus der Gruppe der Polyglycidylether, Polyglyciester und der Polyglycidylamine als besonders geeignet. Das Kunstharz ist demnach vorteilhaft hergestellt worden durch Umsetzung eines Polyglycidylesters oder -ethers mit einer Verbindung, die 2 gegenüber Epoxidgruppen reaktive Gruppen und mindestens eine aktivierte Carboxylestergruppe trägt, zu einem Zwischenprodukt mit endständigen Epoxidgruppen und Umsetzungen dieser Epoxidgruppen unter Ringöffnung mit einem primären oder sekundären Amin, einem Ketimin oder Aldimin, das am Stickstoffatom ein Wasserstoffatom aufweist, oder einem am Stickstoffatom blockierten Aminoalkohol.

Unter Polyglycidylether im Rahmen dieser Erfindung werden vorzugsweise solche Polyglycidylether der allgemeinen Formel

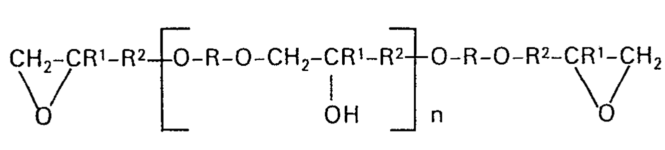

mit

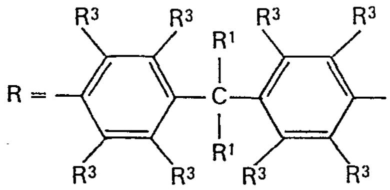

$R^1$ = H oder $C_nH_{2n+1}$
$R^2$ = $(CR^1_2)n$
$R^3$ = $R^1$, Halogen und bevorzugt H
n = 0 bis 20
verstanden.

Die Polyglycidylether der aufgeführten allgemeinen Formel haben eine zahlenmittlere Molmasse von etwa 340 bis 5000 und dementsprechend ein Epoxidäquivalentgewicht von 170 bis 2500. Die Epoxidharze können auch hydriert oder teilhydriert eingesetzt werden. Zur Steuerung der Filmeigenschaften können ein Teil oder alle der reaktionsfähigen Gruppen des Epoxidharzes mit anderen Verbindungen umgesetzt werden. Hierfür bieten sich an:

a) Carboxylgruppenhaltige Verbindungen wie gesättigte oder ungesättigte Monocarbonsäuren (z.B. Benzoesäure, Leinölfettsäure, 2-Ethylhexylsäure, Versaticsäure, aliphatische, cycloaliphatische und/oder aromatische Dicarbonsäuren verschiedener Kettenlängen (z.B. Adipinsäure, Sebacinsäure, Isophthalsäure oder dimere Fettsäuren), Hydroxyalkylcarbonsäuren (z.B. Milchsäure, Dimethylolpropionsäure) sowie carboxylgruppenhaltige Polyester oder

b) Aminogruppenhaltige Verbindungen wie Diethylamin oder Ethylhexylamin oder Diamine mit sekundären Aminogruppen, wie z.B. N,N'-Dialkylendiamin wie Dimethylethylendiamin, N,N'-Dialkylpolyoxyalkylenamin wie N,N'-Dimethyl-polyoxypropylendiamin, cyanalkylierte Alkylendiamine wie Bis-N,N'-Cyanethyl-ethyldiamin, cyanalkylierte Polyoxyalkylenamine wie Bis-N,N-Cyanethylpolyoxypropylendiamin, Polyaminoamide wie Versamide oder das Umsetzungsprodukt von einem Mol Diaminohexan mit zwei Molen Monoglycidylether oder Monoglycidylester, speziell Glycidylester α-verzweigter Fettsäuren wie der Versaticsäure, oder

c) Hydroxylgruppenhaltige Verbindungen wie Neopentylglykol, bisethoxyliertes Neopentylglykol, Hydroxypivalinsäureneopentylglykolester, Dimethylhydantoin-N,N'-diethanol, Hexandiol-1,6, Hexandiol-2,5, Buten-2-diol-1,4-, Butin-2-diol-1,4, Hexin-3-diol-2,5 oder andere Alkindiole, 1,4-Bis-(hydroxymethyl)-cyclohexan, 1,1-Isopropyliden-bis-(p-phenoxyl)-2-propanol, Trimethylolpropan, Pentaerythrit oder Aminoalkohole wie Triethanolamin, Methyldiethanolamin oder hydroxylgruppenhaltige Alkylketimine wie Aminomethylpropandiol-1,3-methyl-isobutylketimin oder Tris-(hydroxymethyl)-aminomethan-cyclohexanketimin sowie auch Polyglykolether, Polyesterpolyole, Polyetherpolyole, Polycaprolactonpolyole, verschiedener Funktionalität und Molekulargewichte.

Anstelle der Polyglycidylether auf Basis Bisphenol A können auch Polyglycidylether auf Basis anderer Grundkomponenten wie Triglycidylisocyanurat, heterocyclische Diclycidylverbindungen oder Diglycidylhydantoine eingesetzt werden.

Als Polyglycidylester sind Umsetzungsprodukte von z.B. Terephthalsäurebisglycidylester oder Isophthalsäurebisglycidylester mit z.B. Bisphenol A oder der die aktivierte Estergruppe tragenden Komponente geeignet. Das Epoxidäquivalentgewicht dieser Produkte liegt zwischen 200 bis 2500. Zur Steuerung der Filmeigenschaften kann ein Teil der verbliebenen, reaktiven Glycidylgruppen mit anderen Verbindungen umgesetzt werden. Hierfür bieten sich die oben unter a, b und c genannten Verbindungen an.

Unter Polyglycidylaminen werden solche glycidylgruppenhaltigen Harze verstanden, die man durch Einführung von Glycidylgruppen über z.B. Epichlorhydrin in $NH_2$-funktionelle Harze erhält.

Eine weitere vorteilhafte Ausgestaltung der Erfindung ist dadurch gekennzeichnet, dass das Kunstharz ein Polyurethanharz ist, das hergestellt worden ist durch Umsetzung eines Diisocyanats mit einer Verbindung, die 2 gegenüber Isocyanatgruppen reaktive Gruppen und mindestens eine β-Hydroxyalkylestergruppe oder mindestens eine Carbalkoxymethylestergruppe trägt, zu einem Zwischenprodukt mit endständigen Isocyanatgruppen und Umsetzung dieser Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol.

Als Bindemittel können Basisharze mit mindestens 2 Isocyanatgruppen eingesetzt werden. Bevorzugte Isocyanatgruppen enthaltende Harze sind höherfunktionelle Polyisocyanate, die durch Trimerisation oder Oligomerisation aus Diisocyanaten oder Polyisocyanaten und polyfunktionellen OH- oder NH-Gruppen enthaltenden Verbindungen dargestellt werden. Typische Isocyanate sind Toluylendiisocyanate, Hexamethylendiisocyanat, 4,4'-Diphenylmethandiisocyanat, 4,4'-Dicyclohexylmethandiisocyanat, 1,6-Diisocyanato-2,2,4-trimethylhexan and 1-Isocyanatomethyl-3-isocyanato-1,5,5-trimethylcyclohexan.

Teilepoxidierte Polybutadiene sind ebenfalls zur Modifizierung mit Aminogruppen enthaltenen Verbindungen und β-Hydroxyalkylestergruppen bzw. Carbalkoxymethylestergruppen enthaltenen Verbindungen geeignet.

Unter teilepoxidierten Polybutadienölen werden hier Umsetzungsprodukte verstanden, die durch Reaktion von handelsüblichen Polybutadienölen mit Persäuren bzw. organischen Säure-$H_2O_2$-Mischungen erhalten werden. Die Darstellungsmethode wird z.B. in der Chemiker-Zeitung 95, 857f (1971) beschrieben.

Bevorzugt geeignet sind auch Copolymerisate von Acrylsäureester und/oder Methacrylsäureester, die z.B. Acrylsäure- und/oder Methacrylsäureglycidylester oder eine andere, eine Glycidylgruppe tragende, olefinisch ungesättigte, polymerisierbare Verbindung sowie β-Hydroxyalkylester der Acryl- und/oder Methacrylsäure bzw. Carbalkoxymethylacrylat und/oder Carbalkoxymethylmethacrylat enthalten. Die Glycidylgruppen können in einem weiteren Reaktionsschritt mit der die Aminogruppen tragenden Verbindung modifiziert werden. In der zu polymerisierenden Monomerenmischung können jedoch auch geeignete, aminogruppenhaltige Monomere eingesetzt werden.

Die Copolymerisate weisen bevorzugt eine zahlenmittlere Molmasse von 700 bis 15 000 auf. Bevorzugte Monomere sind Acryl- und Methacrylsäureester mit 1 bis 8 Kohlenstoffatomen im Alkoholrest. Die Copolymerisate können jedoch auch weitere Monomere wie (Meth)-acrylamid, Styrol, Vinyltoluol oder Vinylcarbazol enthalten. Die Copolymerisation erfolgt in wohlbekannter Weise durch Lösungs-, Suspensions- oder Emulsionspolymerisation unter Zusatz von Initiatoren wie Peroxiden, Hydroperoxiden, Perestern oder thermolabilen Azoverbindungen sowie gegebenenfalls von Molekulargewichtsreglern.

Das Einführen der primären und/oder sekundären Aminogruppen in das organische Harz erfolgt vorzugsweise durch Reaktion eines Polyamids und/oder eines amino- und/oder hydroxylgruppenhaltigen Ketimins mit Harzen, die mindestens eine, vorzugsweise mindestens zwei Epoxidgruppen oder Isocyanatgruppen oder eine andere, geeignete reaktive Gruppe je Molekül enthalten. Ein Bindemittel mit reaktiven Aminogruppen kann aber auch durch andere Anlagerungsreaktionen erhalten werden, z.B. durch Verestern oder Amidieren von primäre und/oder sekundäre Aminogruppen tragende Verbindungen mit hierfür geeignete Gruppen enthaltende Harze.

Zur Einführung der Aminogruppen sind besonders Polyamine und/oder amino- und/oder hydroxylgruppenhaltige Ketimine geeignet. Wird die Anlagerung der primären und sekundären Aminogruppen tragenden Verbindung in Form ihrer Ketimine durchgeführt, so sind die Reaktionsbedingungen so zu führen, dass im Reaktionsprodukt keine die Ketimine zersetzende Substanzen verbleiben. Bei den bevorzugten Ketiminen handelt es sich um Umsetzungprodukte aus Ketonen und hydroxyl- oder sekundären Aminogruppen enthaltende Alkylamine oder Alkyldiamine mit der allgemeinen Struktur R - NH - R' - $NH_2$ bzw. HO - R - $NH_2$.

Die Ketimine weisen z.B. folgende Struktur auf:

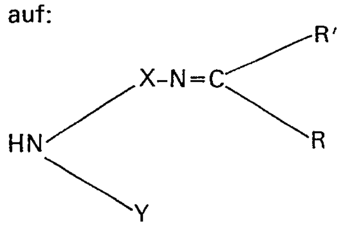

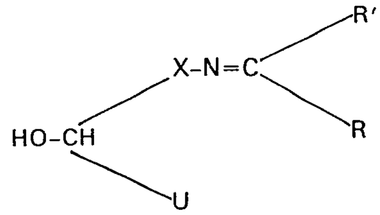

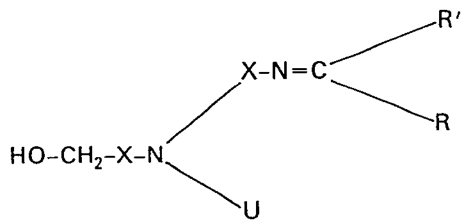

wobei bedeuten:

X = $-(CR_2)_n-$
R = -H, -R'
R' = $-C_mH_{2m+1}$, $-C_6H_{11}$
U = -R, -Y

```
              R'
              |
Y  = -X-N=C, -X-OH, -R' oder
              |
              R

-CH2-CH-CH2-O-Z-R'
     |
     OH
```

Z = =CO, -X
n = 1-6
m = 1-12

Die zur Reaktion mit den primären Aminogruppen eingesetzten Ketone sind im allgemeinen aliphatische Ketone wie Methylethylketon, Diethylketon, Methylisobutylketon, Ethyl-n-propylketon und cycloaliphatische Ketone wie Cyclopentanon und Cyclohexanon. Bei den bevorzugten Aminoalkylaminen und Alkanolaminen handelt es sich überwiegend um Diethylentriamin, N-Methylethylendiamin, N-Methylpropylendiamin, N-Aminoethyl-piperazin, 2-Aminoethanol, 1-Aminopropanol-2, 1-Aminopropanol-3, 2-Amino-2-methylpropanol-1, 3-Amino-2,2-dimethyl-propanol-1, 1,5-Diaminopentanol-3 oder N-(2-Aminoethyl)-N-(2-hydroxyethyl)-ethylendiamin.

Die exotherme Addition der oben beschriebenen Aminoketimine an die Epoxidgruppen des Basisharzes der Bindemittelkomponente erfolgt im allgemeinen bei Raumtemperatur. Zur vollständigen Umsetzung wird die Reaktion häufig bei Temperaturen zwischen 50 und 125°C beendet.

Die Addition der Hydroxyketimine an die Epoxidgruppen des Basisharzes der Bindemittelkomponente A erfolgt in der Regel im gleichen Temperaturbereich, jedoch ist die Verwendung eines basischen Katalysators wie N,N-Dimethylbenzylamin oder auch eines Friedel-Crafts-Katalysators wie Zinn-II-Chlorid ratsam.

Zur Einführung der aktivierten Estergruppen in das Bindemittel eignen sich insbesondere Verbindungen mit einer oder mehreren Carbonsäuregruppen neben weiteren reaktiven Gruppen, die den Einbau in das Bindemittel ermöglichen. Die Carbonsäuregruppe kann vor oder nach dem Einbau in das Bindemittel in die gewünschte β-Hydroxyalkylestergruppe bzw. Carbalkoxymethylestergruppe überführt werden. Verbindungen, die diese Reaktionsmöglichkeiten besitzen, sind z.B.: Dihydroxymonocarbonsäuren wie 2,2-Bis-(hydroxymethyl)-propionsäure, 4,4(4,4'-Bis-hydroxyphenyl)-valeriansäure, 3,5-Dihydroxybenzoesäure, Di-hydroxydicarbonsäuren wie Weinsäure, 1,1-Methylenbis-(2-hydroxy-3-naphthoesäure) und Aminocarbonsäuren wie 11-Aminoundekansäure, 3-Aminopropionsäure, 4-Aminobenzoesäure.

Diese, die aktivierte Estergruppe enthaltenden Verbindungen können über ihre reaktive Gruppen, insbesondere über Hydroxy- oder Aminogruppen, mit reaktiven Gruppen im Harzbindemittel umgesetzt werden. Das Harzbindemittel weist hierzu bevorzugt Epoxid- oder Isocyanatgruppen auf. Die reaktiven Gruppen können im Bindemittel endständig oder längs der Molekülkette eingebaut sein.

Für die Elektrotauchlackierung ist es erforderlich, dass die Bindemittelmischung nach Protonisierung mit Säure in Form einer wässrigen Lösung oder Dispersion vorliegt. Die Wasserlöslichkeit des Bindemittels wird durch Neutralisation der in ihnen enthaltenden primären, sekundären und/oder tertiären Aminogruppen mit Säuren bewirkt. Geeignete Säuren sind insbesondere organische Säuren, es kann jedoch auch beispielsweise Salzsäure oder Phosphorsäure eingesetzt werden. Bevorzugt werden die Aminogruppen mit Ameisensäure, Essigsäure, Malonsäure, Milchsäure oder Zitronensäure neutralisiert.

Die genannten Säuren können auch verwendet werden, wenn die Einführung der solubilisierenden Gruppen durch Anlagerung einer Ammoniumgruppen oder dem Salz einer Sulfid/Säure- oder Phosphin-Säuremischung an das Bindemittel erfolgt.

Der Neutralisationsgrad der solubilisierenden Gruppen liegt, bezogen auf diese Gruppen, zwischen 0,2 bis 1,0 Äquivalent und bevorzugt zwischen 0,25 bis 0,6 Äquivalente Säure.

Die Neutralisation kann auf folgenden Wegen durchgeführt werden. Die Säure wird in Wasser, gegebenenfalls zusammen mit Dispergierhilfsmittel, vorgelegt und die Harzlösung wird bei Raumtemperatur oder gegebenenfalls bei erhöhten Temperaturen in das Wasser eingerührt. Die Säure kann aber auch direkt der Harzlösung zugegeben werden. Die neutralisierte Harzlösung kann nun in das Wasser eingerührt werden, gegebenenfalls kann man das Wasser auch langsam in die Harzlösung einarbeiten.

Die Dispersion kann zur Steuerung ihrer Viskosität, der Abscheidespannung und des Verlaufs bis zu 20% organische Lösungsmittel enthalten. Enthält der Ansatz durch das gewählte Darstellungsverfahren zuviel oder gar für die Eigenschaften schädliche Lösungsmittel, so kann man diese vor dem Dispergieren aus der Harzlösung herausdestillieren oder man destilliert sie aus der wässrigen Dispersion ab. Vorteilhaft für die Summe aller Eigenschaften ist ein möglichst geringer Anteil an organischen Lösungsmitteln enthalten.

Der Festkörper eines Abscheidebades, das mit den erfindungsgemässen Bindemitteln angesetzt ist, beträgt 7 - 35 Gew.-Teile, bevorzugt aber 12–25 Gew.-Teile. Der pH-Wert des Abscheidebades liegt zwischen 4 und 8, vorzugsweise aber zwischen 5 und 7,5. Als Anoden des Abscheidebades werden nicht korrodierende Stahlanoden oder Graphitanoden verwendet. Die Temperatur des Badansatzes soll zwischen 15 bis 35°C, bevorzugt zwischen 20 und 30°C liegen. Die Abscheidedauer und -spannung werden so gewählt, dass die gewünschte Schichtstärke erreicht wird.

Nach der Abscheidung wird der beschichtete Gegenstand abgespült und ist zum Einbrennen bereit.

Unabhängig von dem Applikationsverfahren der auf Basis des erfindungsgemässen Bindemittels hergestellten Überzugsmittel erfolgt die Vernetzung des Lackfilms während des Einbrennens bei Temperaturen von 130 bis 200°C über eine Zeitdauer von 10–60 Minuten, bevorzugt bei 150 bis 180°C während 15–30 Minuten.

Die Amidierungsreaktion kann durch geeignete Katalysatoren noch beschleunigt werden. Hierzu sind insbesondere geeignet Ammoniumverbindungen wie Benzyltrimethylammoniumhydroxid, Benzyltrimethylammoniumchlorid, Trimethylcetylammoniumbromid oder Tetraalkylammoniumjodid und organische Zinnverbindungen wie Dibutylzinndilaurat und Eisen-III- acetylacetonat, Zinkacetat, Zink-2-ethylnexoat, Kobaltnaphthenat, Bleiacetat, Bleioctoat oder Butyltitanat.

Die Pigmentierung erfolgt in wohlbekannter Weise. Hierbei werden die Pigmente sowie die üblichen Zusatzstoffe wie Füllstoffe, Korrosionsschutzinhibitoren und Antischaummittel in dem Bindemittel angemahlen. Als Mahlaggregate können z.B. Sandmühlen, Kugelmühlen oder Dreiwalzen verwendet werden.

Die Komplettierung des Lackes kann, wie allgemein bekannt, erfolgen.

Die Erfindung betrifft auch ein Verfahren zur Herstellung eines Bindemittels, insbesondere für Elektrotauchlacke, auf der Basis eines organischen Kunstharzes, das primäre und/oder sekundäre und gegebenenfalls auch tertiäre Aminogruppen und veresterte Carboxylgruppen enthält und durch partielle oder vollständige Neutralisation mit Säuren wasserverdünnbar ist, wobei die veresterten Carboxylgruppen in der Alkoholkomponente durch einen Substituenten, der einen negativen induktiven Effekt bewirkt, aktiviert sind, das dadurch gekennzeichnet ist, dass ein Polyglycidylester oder -ether mit einer Verbindung, die 2 gegenüber Epoxidgruppen reaktive Gruppen und mindestens eine β-Hydroxyalkylestergruppe oder mindestens eine Carbalkoxymethylestergruppe trägt, zu einem Zwischenprodukt mit endständigen Epoxidgruppen umgesetzt wird und diese Epoxidgruppen unter Ringöffnung mit einem primären oder sekundären Amin, einem Ketimin oder Aldimin, das am Stickstoffatom ein Wasserstoffatom aufweist, oder einem am Stickstoffatom blockierten Aminoalkohol umgesetzt werden kann.

Die Erfindung betrifft auch ein Verfahren zur Herstellung eines Bindemittels, insbesondere für Elektrotauchlacke, auf der Basis eines organischen Kunstharzes, das primäre und/oder sekundäre und gegebenenfalls auch tertiäre Aminogruppen und veresterte Carboxylgruppen enthält und durch partielle oder vollständige Neutralisation mit Säuren wasserverdünnbar ist, wobei die veresterten Carboxylgruppen in der Alkoholkomponente durch einen Substituenten, der einen negativen induktiven Effekt bewirkt, aktiviert sind, das dadurch gekennzeichnet ist, dass ein Diisocyanat mit einer Verbindung, die 2 gegenüber Isocyanatgruppen reaktive Gruppen und mindestens eine β-Hydroxyalkylestergruppe oder mindestens eine Carbalkoxymethylestergruppe trägt, zu einem Zwischenprodukt mit endständigen Isocyanatgruppen umgesetzt wird und diese Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol umgesetzt werden.

Die Erfindung betrifft weiterhin die Verwendung der Bindemittel zur Herstellung von Elektrotauchbädern für das Elektrotauchlackierverfahren.

Die Erfindung betrifft ferner ein Verfahren zum Herstellen von Überzügen, bei dem ein elektrisch leitendes Substrat in ein wässriges Elektrotauchbad, das ein mindestens teilweise durch Säure neutralisiertes Bindemittel auf der Basis einer primären und/oder sekundären Aminogruppen und veresterte Carboxylgruppen enthaltenden organischen Kunstharzes enthält, eintaucht und als Kathode geschaltet wird, durch Gleichstrom ein Film auf dem Substrat abgeschieden wird, das Substrat aus dem Bad entfernt wird und der Film durch Einbrennen zu einem Überzug gehärtet wird, das dadurch gekennzeichnet ist, dass die veresterten Carboxylgruppen des Kunstharzes β-Hydroxyalkylestergruppen oder Carbalkoxymethylestergruppen sind, das Bindemittel ein Epoxidharz oder ein Polyurethanharz ist, das hergestellt worden ist durch Umsetzung einer mindestens 2 Isocyanatgruppen enthaltenen Verbindungen mit einer Verbindung, die 2 gegenüber Isocyanatgruppen reaktive Gruppen und mindestens eine aktivierte Carboxylestergruppe trägt, zu einem Zwischenprodukt mit endständigen Isocyanatgruppen und Umsetzung dieser Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol, und die veresterten Carboxylgruppen mit den primären und/oder sekundären Aminogruppen unter Bildung von Amidgruppen umgesetzt werden.

Eine weitere vorteilhafte Ausgestaltung des Verfahrens zum Herstellen von Überzügen besteht darin, dass als Bindemittel ein Epoxidharz verwendet wird, das hergestellt worden ist durch Umsetzung eines Polyglycidylesters oder -ethers mit einer Verbindung, die 2 gegenüber Epoxidgruppen reaktive Gruppen und mindestens eine β-Hydroxyalkylestergruppe oder mindestens eine Carbalkoxymethylestergruppe trägt, zu einem Zwischenprodukt mit endständigen Epoxidgruppen und Umsetzung dieser Epoxidgruppen unter Ringöffnung mit einem primären oder sekundären Amin, einem Ketimin oder Aldimin, das am Stickstoffatom ein Wasserstoffatom aufweist, oder einem am Stickstoffatom blockierten Aminoalkohol.

Eine weitere vorteilhafte Ausgestaltung des Verfahrens besteht darin, dass als Bindemittel ein Polyurethanharz verwendet wird, das hergestellt worden ist durch Umsetzung eines Diisocyanats mit einer Verbindung, die 2 gegenüber Isocyanatgruppen reaktive Gruppen und mindestens eine β-Hydroxyalkylestergruppe oder mindestens eine Carbalkoxymethylestergruppe trägt, zu einem Endprodukt mit endständigen Isocyanatgruppen und Umsetzung dieser Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol.

Die Erfindung betrifft schliesslich auch ein mit einem Überzug versehenes Substrat, das nach dem beschriebenen Verfahren hergestellt worden ist.

Im folgenden wird die Erfindung anhand von Beispielen näher erläutert.

Beispiel 1

a) Darstellung von 4,4-(4,4′-Dihydroxydiphenyl)-pentansäure-2-hydroxy-3-(1-oxo-2-methyl-2-ethylheptoxy)-propylester

In einem 10 l Reaktionsgefäss mit Rückflusskühler, Rührer und Innenthermometer werden 3810 g 4,4-(4,4′-Dihydroxydiphenyl)-pentansäure, 3855 g 2-Methyl-2-ethylheptansäureglycidylester und 1897 g Cyclohexanon vorgelegt. Hierzu werden 19 g eines Cr-haltigen Katalysators zugegeben. Der Reaktionsansatz wird auf 90°C erhitzt und bei dieser Temperatur gehalten bis die Säurezahl auf 1 abgefallen ist und der Epoxidgehalt $<$ 0,3% ist. Der Festkörper liegt bei 80% 4,4-(4,4′-Dihydroxydiphenyl)-pentansäure-2-hydroxy-3-(1-oxo-2-methyl-2-ethyl-heptoxy)-propylester.

b) Selbstvernetzendes Bindemittel I

In einem 4 l Reaktionsgefäss mit Innenthermometer, Rührer, Rückflusskühler und Stickstoffeinleitung werden 1654 g eines handelsüblichen Epoxidharzes (EEW 188) mit 1696 g des Umsetzungsproduktes aus Beispiel 1 unter Stickstoffüberschleierung vorgelegt und auf 130°C erhitzt. Dann werden 20 ml Dimethylbenzylamin zugesetzt. Die Reaktion wird exotherm. Die Temperatur wird dann auf 165°C gehalten, bis ein EEW von 1520 erreicht ist. Danach kühlt man den Ansatz auf 105°C ab und gibt 176,2 g Diethylentriamin[di(methylisobutyl-ketimin)] und 262 g N-Methyl-1,3-propandiaminmethylisobutylketimin zu. Man hält den Ansatz bei 105°C 1,5 Stunden, kühlt auf 90°C ab, setzt 190 g 2,2,4-Trimethylpentandiol-1,3-monoisobutyrat zu und mischt 20 Minuten. Inzwischen wird ein Dispergierbad aus 4630 g entionisiertem Wasser, 38,5 g eines handelsüblichen Entschäumers und 66 g Eisessig vorbereitet. In diesem Bad wird die Harzlösung eingerührt. Nach 2 Stunden werden weitere 2406 g entionisiertes Wasser zugegeben.

Die Dispersion wird mit entionisiertem Wasser auf 20% Festkörper und mit Essigsäure auf einen pH-Wert von 6,3 eingestellt. Mit dieser Dispersion kann kathodisch in einer Elektrotauchlakkierzelle ein Lackfilm auf zinkphosphatiertem Blech abgeschieden werden. Die Beschichtung erfolgt bei 330 V während 2 Minuten. Nach dem Einbrennen bei 180°C während 20 Minuten erhält man einen gut verlaufenden, gegen Lösungsmittel resistenten Überzug. Die Filmdicke beträgt 21 µm.

Beispiel 2

a) Darstellung von 2,2-Bis-(hydroxymethyl)-propionsäurecarbethoxymethylester

In einem 5 l Reaktionsgefäss mit Rührer, Innenthermometer, Rückflusskühler und 1 l Tropftrichter werden 550 g 2,2-Bis-(hydroxymethyl)-propionsäure mit 2460 g Cyclohexanon vorgelegt und auf 100°C erhitzt. Nachdem der grösste Teil der Dihydroxycarbonsäure in Lösung gegangen ist, kühlt man auf 60°C ab und tropft 414 g Triethylamin zu. Die Temperatur wird durch Kühlung auf 60°C gehalten. Das entstehende Triethylammonium-2,2-bis-(hydroxymethyl)-propionat bleibt in Lösung. Hierauf gibt man 7 g Kaliumjodid zu und tropft 500 g Chloressigsäureethylester während 30 Minuten zu. Man hält den Ansatz für weitere 4 Stunden bei dieser Temperatur, lässt ihn auf Raumtemperatur abkühlen und filtriert das gebildete Triethylammoniumchlorid ab. Das Filtrat wird am Rotationsverdampfer auf einen Festkörper von 80% eingeengt.

b) Selbstvernetzendes Bindemittel II

In einem 4 l Reaktionsgefäss mit Rührer, Innenthermometer, Stickstoffzuleitung und Rückflusskühler werden 888 g 4,4′-Diisocyanatodiphenylmethan in 344 g Butylacetat vorgelegt. Der Ansatz wird gut mit Stickstoff überschleiert. Hierzu gibt man portionsweise 732 g der 80%igen Adduktlösung von Beispiel 2a. Die Temperatur soll hierbei 45°C nicht übersteigen. Nach Beendigung der Zugabe lässt man noch 3 Stunden bei 60°C nachreagieren, kühlt auf 40°C ab und setzt danach 146 g Diethylentriamin in 1488 g Butylacetat zu. Nach Ende der Zugabe lässt man noch 1 1/2 Stunden nachreagieren.

Lackfilme mit dieser Harzlösung (2 Minuten mit 270 V abgeschieden) können während 20 Minuten bei 170°C eingebrannt werden. Sie sind gut verlaufen und gegen Lösungsmittel resistent. Die Trockenfilmdicke beträgt 23 µm.

**Patentansprüche**

1. Selbstvernetzendes, hitzehärtbares Bindemittel, insbesondere für Elektrotauchlacke, auf der Basis eines organischen Kunstharzes, das primäre und/oder sekundäre und gegebenenfalls auch tertiäre Aminogruppen und veresterte Carboxylgruppen enthält und durch partielle oder vollständige Neutralisation mit Säuren wasserverdünnbar ist, wobei die veresterten Carboxylgruppen in der Alkoholkomponente durch einen Substituenten, der einen negativen induktiven Effekt bewirkt, aktiviert sind, dadurch gekennzeichnet, dass als hitzehärtbare Bindemittel ein Epoxidharz oder ein Polyurethanharz, das hergestellt worden ist durch Umsetzung einer mindestens 2 Isocyanatgruppen enthaltenden Verbindung mit einer Verbindung, die 2 gegenüber Isocyanatgruppen reaktive Gruppen und mindestens eine aktivierte Carboxylestergruppe trägt, zu einem Zwischenprodukt mit endständigen Isocyanatgruppen und Umsetzung dieser Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol, eingesetzt ist und die veresterten Carboxylgruppen β-Hydroxyalkylestergruppen oder Carbalkoxymethylestergruppen sind.

2. Bindemittel nach Anspruch 1, dadurch gekennzeichnet, dass das Kunstharz 1 bis 5 primäre und/oder sekundäre Aminogruppen und 1 bis 5 aktivierte Estergruppen pro 1000 Molekulargewichtseinheiten enthält.

3. Bindemittel nach Anspruch 1 und 2, dadurch gekennzeichnet, dass das Äquivalenzverhältnis zwischen den primären und/oder sekundären Aminogruppen und den aktivierten Carboxylestergruppen 2:1 bis 1:2 beträgt.

4. Bindemittel nach Anspruch 1 bis 3, dadurch gekennzeichnet, dass das Epoxidharz hergestellt worden ist durch Umsetzung eines Polyglycidylesters oder -ethers mit einer Verbindung, die 2 gegenüber Epoxidgruppen reaktive Gruppen und mindestens eine aktivierte Carboxylestergruppe trägt, zu einem Zwischenprodukt mit endständigen Epoxidgruppen und Umsetzung dieser Epoxidgruppen unter Ringöffnung mit einem primären oder sekundären Amin, einem Ketimin oder Aldimin, das am Stickstoffatom ein Wasserstoffatom aufweist, oder einem am Stickstoffatom blockierten Aminoalkohol.

5. Bindemittel nach Anspruch 1 bis 3, dadurch gekennzeichnet, dass das Polyurethanharz hergestellt worden ist durch Umsetzung eines Diisocyanats mit einer Verbindung, die 2 gegenüber Isocyanatgruppen reaktive Gruppen und mindestens eine β-Hydroxyalkylestergruppe oder mindestens eine Carbalkoxymethylestergruppe trägt, zu einem Zwischenprodukt mit endständigen Isocyanatgruppen und Umsetzung dieser

Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol.

6. Verfahren zur Herstellung eines Bindemittels, insbesondere für Elektrotauchlacke, auf der Basis eines organischen Kunstharzes, das primäre und/oder sekundäre und gegebenenfalls auch tertiäre Aminogruppen und veresterte Carboxylgruppen enthält und durch partielle oder vollständige Neutralisation mit Säuren wasserverdünnbar ist, wobei die veresterten Carboxylgruppen in der Alkoholkomponente durch einen Substituenten, der einen negativen induktiven Effekt bewirkt, aktiviert sind, dadurch gekennzeichnet, dass ein Polyglycidylester oder -ether mit einer Verbindung, die 2 gegenüber Epoxidgruppen reaktive Gruppen und mindestens eine β-Hydroxyalkylestergruppe oder mindestens eine Carbalkoxymethylestergruppe trägt, zu einem Zwischenprodukt mit endständigen Epoxidgruppen umgesetzt wird und diese Epoxidgruppen unter Ringöffnung mit einem primären oder sekundären Amin, einem Ketimin oder Aldimin, das am Stickstoffatom ein Wasserstoffatom aufweist, oder einem am Stickstoffatom blockierten Aminoalkohol umgesetzt werden.

7. Verfahren zur Herstellung eines Bindemittels, insbesondere für Elektrotauchlacke, auf der Basis eines organischen Kunstharzes, das primäre und/oder sekundäre und gegebenenfalls auch tertiäre Aminogruppen und veresterte Carboxylgruppen enthält und durch partielle oder vollständige Neutralisation mit Säuren wasserverdünnbar ist, wobei die veresterten Carboxylgruppen in der Alkoholkomponente durch einen Substituenten, der einen negativen induktiven Effekt bewirkt, aktiviert sind, dadurch gekennzeichnet, dass ein Diisocyanat mit einer Verbindung, die 2 gegenüber Isocyanatgruppen reaktive Gruppen und mindestens eine β-Hydroxyalkylestergruppe oder mindestens eine Carbalkoxymethylestergruppe trägt, zu einem Zwischenprodukt mit endständigen Isocyanatgruppen umgesetzt wird und diese Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol umgesetzt werden.

8. Verfahren nach Anspruch 6 oder 7, dadurch gekennzeichnet, dass die Molverhältnisse der verwendeten Ausgangsstoffe so gewählt werden, dass ein Bindemittel mit 1 bis 5 primären und/oder sekundären Aminogruppen und 1 bis 5 aktivierten Carboxylestergruppen pro 1000 Molekulargewichtseinheiten erhalten wird.

9. Verfahren nach Anspruch 6 bis 8, dadurch gekennzeichnet, dass die Molverhältnisse der Ausgangsstoffe so gewählt werden, dass ein Bindemittel mit einem Äquivalenzverhältnis zwischen den primären und/oder sekundären Aminogruppen und den aktivierten Carboxylestergruppen von 2:1 bis 1:2 erhalten wird.

10. Verwendung der Bindemittel nach Anspruch 1 bis 5 zur Herstellung von Elektrotauchbädern für das Elektrotauchlackierverfahren.

11. Verfahren zum Herstellen von Überzügen, bei dem ein elektrisch leitendes Substrat in ein wässriges Elektrotauchbad, das ein mindestens teilweise durch Säure neutralisiertes Bindemittel auf der Basis eines primäre und/oder sekundäre Aminogruppen und veresterte Carboxylgruppen enthaltenden organischen Kunstharzes enthält, eingetaucht und als Kathode geschaltet wird, durch Gleichstrom ein Film auf dem Substrat abgeschieden wird, das Substrat aus dem Bad entfernt wird und der Film durch Einbrennen zu einem Überzug gehärtet wird, dadurch gekennzeichnet, dass die veresterten Carboxylgruppen des Kunstharzes β-Hydroxyalkylestergruppen oder Carbalkoxymethylestergruppen sind, das Bindemittel ein Epoxidharz oder ein Polyurethanharz ist, das hergestellt worden ist durch Umsetzung einer mindestens 2 Isocyanatgruppen enthaltenden Verbindung mit einer Verbindung, die 2 gegenüber Isocyanatgruppen reaktive Gruppen und mindestens eine aktivierte Carboxylestergruppe trägt, zu einem Zwischenprodukt mit endständigen Isocyanatgruppen und Umsetzung dieser Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol, und die veresterten Carboxylgruppen mit den primären und/oder sekundären Aminogruppen unter Bildung von Amidgruppen umgesetzt werden.

12. Verfahren nach Anspruch 11, dadurch gekennzeichnet, dass als Bindemittel ein Kunstharz verwendet wird, das 1 bis 5 primäre und/oder sekundäre Aminogruppen und 1 bis 5 aktivierte Estergruppen pro 1000 Molekulargewichtseinheiten enthält.

13. Verfahren nach Anspruch 11 und 12, dadurch gekennzeichnet, dass als Bindemittel ein Kunstharz verwendet wird, das ein Äquivalenzverhältnis zwischen den primären und/oder sekundären Aminogruppen und den aktivierten Carboxylestergruppen von 2:1 bis 1:2 aufweist.

14. Verfahren nach Anspruch 11–13, dadurch gekennzeichnet, dass als Bindemittel ein Epoxidharz verwendet wird, das hergestellt worden ist durch Umsetzung eines Polyglycidylesters oder -ethers mit einer Verbindung, die 2 gegenüber Epoxidgruppen reaktive Gruppen und mindestens eine β-Hydroxyalkylestergruppe oder mindestens eine Carbalkoxymethylestergruppe trägt, zu einem Zwischenprodukt mit endständigen Epoxidgruppen und Umsetzung dieser Epoxidgruppen unter Ringöffnung mit einem primären oder sekundären Amin, einem Ketimin oder Aldimin, das am Stickstoffatom ein Wasserstoffatom aufweist, oder einem am Stickstoffatom blockierten Aminoalkohol.

15. Verfahren nach Anspruch 11–14, dadurch gekennzeichnet, dass als Bindemittel ein Polyurethanharz verwendet wird, das hergestellt worden ist durch Umsetzung eines Diisocyanats mit einer Verbindung, die 2 gegenüber Isocyanatgruppen reaktive Gruppen und mindestens eine β-Hydroxyalkylestergruppe oder mindestens eine Carbalkoxymethylestergruppe trägt, zu einem Zwischenprodukt mit endständigen Isocyanatgruppen und Umsetzung dieser Isocyanatgruppen mit einem primären oder sekundären Amin, einem Ketimin oder Aldimin, das am Stickstoffatom ein Wasserstoffatom aufweist, oder einem am Stickstoffatom blockierten Aminoalkohol.

16. Mit einem Überzug versehenes Substrat, hergestellt durch das Verfahren nach Anspruch 11 bis 15.

**Revendications**

1. Liant auto-réticulant thermodurcissable, en particulier pour peintures d'électrophorèse, à base d'une résine synthétique organique qui contient des groupes amine primaires et/ou secondaires et éventuellement aussi tertiaires et des groupes carboxyle estérifiés et peut être diluée par l'eau par neutralisation partielle ou complète avec des acides, les groupes carboxyle estérifiés étant activés dans le constituant alcoolique par un substituant qui provoque un effet inductif négatif, caractérisé par le fait que comme liant thermodurcissable est utilisée une résine d'époxyde ou une résine de polyuréthanne que l'on a préparée par réaction d'un composé contenant au moins 2 groupes isocyanate sur un composé qui porte 2 groupes réactifs vis-à-vis des groupes isocyanate et au moins un groupe ester carboxylique activé, pour la formation d'un produit intermédiaire à groupes isocyanate terminaux et réaction de ces groupes isocyanate sur une amine primaire ou secondaire, une cétimine ou une aldimine qui présente sur l'atome d'azote un atome d'hydrogène, ou sur un aminoalcool bloqué sur l'atome d'azote, et que les groupes carboxyle estérifiés sont des groupes ester de β-hydroxylalkyle ou des groupes ester de carbalcoxyméthyle.

2. Liant selon la revendication 1, carctérisé par le fait que la résine synthétique contient 1 à 5 groupes amine primaires et/ou secondaires et 1 à 5 groupes ester activés par 1,000 unités de poids moléculaire.

3. Liant selon les revendications 1 et 2, caractérisé par le fait que le rapport d'équivalence entre les groupes amine primaires et/ou secondaires et les groupes ester carboxylique activé est de 2:1 à 1:2.

4. Liant selon les revendications 1 à 3, caractérisé par le fait que la résine d'époxyde a été préparée par réaction d'un ester ou éther de polyglycidyle sur un composé qui porte 2 groupes réactifs vis-à-vis des groupes époxyde et au moins un groupe ester carboxylique activé, pour la formation d'un produit intermédiaire à groupes époxyde terminaux et réaction de ces groupes époxyde avec décyclisation sur une amine primaire ou secondaire, une cétimine ou une aldimine qui présente sur l'atome d'azote un atome d'hydrogène, ou sur un aminoalcool bloqué sur l'atome d'azote.

5. Liant selon les revendications 1 à 3, caractérisé par le fait que la résine de polyuréthanne a été préparée par réaction d'un diisocyanate sur un composé qui porte 2 groupes réactifs vis-à-vis des groupes isocyanate et au moins un groupe ester de β-hydroxyalkyle ou au moins un groupe ester de carbalcoxyméthyle, pour la formation d'un produit intermédiaire à groupes isocyanate terminaux et réaction de ces groupes isocyanate sur une amine primaire ou secondaire, une cétimine ou une aldimine qui présente sur l'atome d'azote un atome d'hydrogène, ou sur un aminoalcool bloqué sur l'atome d'azote.

6. Procédé pour la préparation d'un liant, en particulier pour peintures d'électrophorèse, à base d'une résine synthétique organique qui contient des groupes amine primaires et/ou secondaires et éventuellement aussi tertiaires et des groupes carboxyle estérifiés et peut être diluée par l'eau par neutralisation partielle ou complète avec des acides, les groupes carboxyle estérifiés du constituant alcoolique étant activés dans le constituant alcoolique par un substituant qui provoque un effet inductif négatif, caractérisé par le fait que l'on fait réagir un ester ou éther de polyglycidyle sur un composé qui porte 2 groupes réactifs vis-à-vis des groupes époxyde et au moins un groupe ester de β-hydroxyalkyle ou au moins un groupe ester de carbalcoxyméthyle, pour la formation d'un produit intermédiaire à groupes époxyde terminaux et que l'on fait réagir ces groupes époxyde avec décyclisation sur une amine primaire ou secondaire, une cétimine ou une aldimine qui présente sur l'atome d'azote un atome d'hydrogène ou sur un aminoalcool bloqué sur l'atome d'azote.

7. Procédé pour la préparation d'un liant, en particulier pour peintures d'électrophorèse, à base d'une résine synthétique organique qui contient des groupes amine primaires et/ou secondaires et éventuellement aussi tertiaires et des groupes carboxyle estérifiés et peut être diluée par l'eau par neutralisation partielle ou complète avec des acides, les groupes carboxyle estérifiés du constituant alcoolique étant activés dans le constituant alcoolique par un substituant qui provoque un effet inductif négatif, caractérisé par le fait que l'on fait réagir un diisocyanate sur un composé qui porte 2 groupes réactifs vis-à-vis des groupes isocyanate et au moins un groupe ester de β-hydroxyalkyle ou au moins un groupe ester de carbalcoxyméthyle, pour la formation d'un produit intermédiaire à groupes isocyanate terminaux et que l'on fait réagir ces groupes isocyanate sur une amine primaire ou secondaire, une cétimine ou une adimine qui présente sur l'atome d'azote un atome d'hydrogène ou sur un aminoalcool bloqué sur l'atome d'azote.

8. Procédé selon l'une des revendications 6 et 7, caractérisé par le fait que l'on choisit les rapports molaires des matières premières utilisées de façon telle que l'on obtienne un liant ayant 1 à 5 groupes amine primaire et/ou secondaire et 1 à

5 groupes ester carboxylique activés par 1,000 unités de poids moléculaire.

9. Procédé selon les revendications 6 à 8, caractérisé par le fait que l'on choisit les rapports molaires des matières premières de façon telle que l'on obtienne un liant ayant un rapport d'équivalence entre les groupes amines primaires et/ou secondaires et les groupes ester carboxylique de 2:1 à 1:2.

10. Utilisation des liants selon les revendications 1 à 5, pour la préparation de bains d'électrophorèse pour le procédé de peinturage par électrophorèse.

11. Procédé pour la réalisation de revêtement dans lequel on plonge un subjectile conducteur de l'électricité dans un bain aqueux d'électrophorèse qui contient un liant, au moins partiellement neutralisé par de l'acid, à base d'une résine synthétique organique contenant des groupes amine primaires et/ou secondaires et des groupes carboxyle extérifiés et qu'on le branche comme cathode, qu'au moyen de courant continu on dépose un feuil sur le subjectile, que l'on retire le substrat du bain et que l'on durcit le feuil par cuisson en un revêtement, caractérisé par le fait que les groupes carboxyle estérifiés de la résine synthétique sont des groupes ester de β-hydroxyalkyle ou des groupes ester de carbalcoxyméthyle, que le liant est une résine d'époxyde ou une résine de polyuréthanne que l'on a préparé par réaction d'un composé contenant au moins 2 groupes isocyanate sur un composé qui porte 2 groupes réactifs vis-à-vis des groupes isocyanate et au moins un groupe ester carboxylique activé, pour la formation d'un produit intermédiaire à groupes isocyanate terminaux et réaction de ces groupes isocyanate sur une amine primaire ou secondaire, une cétimine ou une aldimine qui présente sur l'atome d'azote un atome d'hydrogène, ou sur un aminoalcool bloqué sur l'atome d'azote et que l'on fait réagir les groupes carboxyle estérifiés sur les groupes amine primaires et/ou secondaires avec formation de groupes amide.

12. Procédé selon la revendication 11, caractérisé par le fait que l'on utilise comme liant une résine synthétique qui contient 1 à 5 groupes amine primaires et/ou secondaires et 1 à 5 groupes ester activés par 1,000 unités de poids moléculaire.

13. Procédé selon les revendications 11 et 12, caractérisé par le fait que l'on utilise comme liant une résine synthétique qui présente un rapport d'équivalence entre les groupes amine primaires et/ou secondaires et les groupes ester carboxylique activé de 2:1 à 1:2.

14. Procédé selon les revendications 11 à 13, caractérisé par le fait que l'on utilise comme liant une résine d'époxyde qui a été préparée par réaction d'un ester ou éther de polyglycidyle sur un composé qui porte 2 groupes réactifs vis-à-vis des groupes époxyde et au moins un groupe ester de β-hydroxyalkyle ou au moins un groupe ester de carbalcoxyméthyle, pour la formation d'un produit intermédiaire à groupes époxyde terminaux et réaction de ces groupes époxyde avec décyclisation sur une amine primaire ou secondaire, une cétimine ou une aldimine qui présente sur l'atome d'azote un atome d'hydrogène, ou sur un aminoalcool bloqué sur l'atome d'azote.

15. Procédé selon les revendications 11 à 14, caractérisé par le fait que l'on utilise comme liant une résine de polyuréthanne qui a été préparée par réaction d'un diisocyanate sur un composé qui porte 2 groupes réactifs vis-à-vis des groupes isocyanate et au moins un groupe ester de β-hydroxyalkyle ou au moins un groupe ester de carbalcoxyméthyle, pour la formation d'un produit intermédiaire à groupes isocyanate terminaux et réaction de ces groupes isocyanate sur une amine primaire ou secondaire, une cétimine ou aldimine qui présente sur l'atome d'azote un atome d'hydrogène, ou sur un aminoalcool bloqué sur l'atome d'azote.

16. Subjectile muni d'un revêtement, fabriqué par le procédé selon les revendications 11 à 15.

**Claims**

1. A self-crosslinking, heat-curable binder, in particular for electrocoating finishes, based on an organic synthetic resin which contains primary and/or secondary and, if appropriate, also tertiary amino groups and esterified carboxyl groups and is rendered water-dilutable by partial or complete neutralization with acids, the esterified carboxyl groups being activated in the alcohol component by a substituent which produces a negative inductive effect, wherein the heat-curable binder used is an epoxy resin or a polyurethane resin which is prepared by reacting a compound containing at least two isocyanate groups with a compound which carries two groups which are reactive toward isocyanate groups and at least one activated carboxylic ester group to give an intermediate having terminal isocyanate groups, and reacting these isocyanate groups with a primary or secondary amine, a ketimine or aldimine, which has a hydrogen atom on the nitrogen atom, or an aminoalcohol blocked at the nitrogen atom, and the esterified carboxyl groups are β-hydroxyalkylester groups or carbalkoxymethyl ester groups.

2. A binder as claimed in claim 1, wherein the synthetic resin contains from 1 to 5 primary and/or secondary amino groups and from 1 to 5 activated ester groups per 1000 molecular weight units.

3. A binder as claimed in claims 1 and 2, wherein the ratio of the number of equivalents of primary and/or secondary amino groups to the number of equivalents of activated carboxylic ester groups is from 2:1 to 1:2.

4. A binder as claimed in claims 1 to 3, wherein the epoxy resin is prepared by reacting a polyglycidyl ester or polyglycidyl ether with a compound which carries 2 groups which are reactive toward epoxide groups and at least one activated carboxylic ester group to give an intermediate having terminal epoxide groups, and subjecting these epoxide groups to a ring-opening reaction with a primary or secondary amine, a ketimine or

aldimine, which has a hydrogen atom on the nitrogen atom, or an aminoalcohol blocked at the nitrogen atom.

5. A binder as claimed in claims 1 to 3, wherein the polyurethane resin is prepared by reacting a diisocyanate with a compound which carries 2 groups which are reactive toward isocyanate groups and at least one β-hydroxyalkyl ester group or at least one carbalkoxymethyl ester group to give an intermediate having terminal isocyanate groups, and reacting these isocyanate groups with a primary or secondary amine, a ketimine or aldimine, which has a hydrogen atom on the nitrogen atom, or an aminoalcohol blocked at the nitrogen atom.

6. A process for the preparation of a binder, in particular for electrocoating finishes, based on an organic synthetic resin which contains primary and/or secondary and, if appropriate, also tertiary amino groups and esterified carboxyl groups and is rendered waterdilutable by partial or complete neutralization with acids, the esterified carboxyl groups being activated in the alcohol component by a substituent which produces a negative inductive effect, wherein a polyglycidyl ester or polyglycidyl ether is reacted with a compound which carries 2 groups which are reactive toward epoxide groups and at least one β-hydroxyalkyl ester group or at least one carbalkoxymethyl ester group to give an intermediate having terminal epoxide groups, and these epoxide groups are subjected to a ring-opening reaction with a primary or secondary amine, a ketimine or aldimine, which has a hydrogen atom on the nitrogen atom, or an aminoalcohol blocked at the nitrogen atom.

7. A process for the preparation of a binder, in particular for electrocoating finishes, based on an organic synthetic resin which contains primary and/or secondary and, if appropriate, also tertiary amino groups and esterified carboxyl groups and is rendered water-dilutable by partial or complete neutralization with acids, the esterified carboxyl groups being activated in the alcohol component by a substituent which produces a negative inductive effect, wherein a diisocyanate is reacted with a compound which carries 2 groups which are reactive toward isocyanate groups and at least one β-hydroxyalkyl ester group or at least one carbalkoxymethyl ester group to give an intermediate having terminal isocyanate groups, and these isocyanate groups are reacted with a primary or secondary amine, a ketimine or aldimine, which has a hydrogen atom on the nitrogen atom, or an aminoalcohol blocked at the nitrogen atom.

8. A process as claimed in claim 6 or 7, wherein the molar ratios of the starting materials used are chosen so that a binder possessing 1 to 5 primary and/or secondary amino groups and from 1 to 5 activated carboxylic ester groups per 1000 molecular weight units is obtained.

9. A process as claimed in claims 6 to 8, wherein the molar ratios of the starting materials are chosen so that, in the binder obtained, the ratio of the number of equivalents of primary and/or secondary amino groups to the number of equivalents of activated carboxylic ester groups is from 2:1 to 1:2.

10. Use of a binder as claimed in claims 1 to 5 for the preparation of electrocoating baths for the electrocoating process.

11. A process for the production of coatings, in which an electrically conductive substrate is immersed in an aqueous electrocoating bath which contains a binder which is at least partially neutralized by an acid and is based on an organic synthetic resin containing primary and/or secondary amino groups and esterified carboxyl groups, and is made the cathode, a film is deposited on the substrate by means of direct current, the substrate is removed from the bath and the film is cured by baking to give a coating, wherein the esterified carboxyl groups of the synthetic resin are β-hydroxyalkyl ester groups or carbalkoxymethyl ester groups, the binder is an epoxy resin or a polyurethane resin which is prepared by reacting a compound containing at least two isocyanate groups with a compound which carries two groups which are reactive toward isocyanate groups and at least one activated carboxylic ester group to give an intermediate having terminal isocyanate groups, and reacting these isocyanate groups with a primary or secondary amine, a ketimine or aldimine, which has a hydrogen atom on the nitrogen atom, or an aminoalcohol blocked at the nitrogen atom, and the esterified carboxyl groups are reacted with the primary and/or secondary amino groups to form amide groups.

12. A process as claimed in claim 11, wherein the binder used is a synthetic resin which contains from 1 to 5 primary and/or secondary amino groups and from 1 to 5 activated ester groups per 1000 molecular weight units.

13. A process as claimed in claims 11 and 12, wherein the binder used is a synthetic resin in which the ratio of the number of equivalents of primary and/or secondary amino groups and the number of equivalents of activated carboxylic ester groups is from 2:1 to 1:2.

14. A process as claimed in claims 11–13, wherein the binder used is an epoxy resin which is prepared by reacting a polyglycidyl ester or polyglycidyl ether with a compound which carries 2 groups which are reactive toward epoxide groups and at least one β-hydroxyalkyl ester group or at least one carbalkoxymethyl ester group to give an intermediate having terminal epoxide groups, and subjecting these epoxide groups to a ring-opening reaction with a primary or secondary amine, a ketimine or aldimine, which has a hydrogen atom on the nitrogen atom, or an aminoalcohol blocked at the nitrogen atom.

15. A process as claimed in claims 11–14, wherein the binder used is a polyurethane resin which is prepared by reacting a diisocyanate with a compound which carries two groups which are reactive toward isocyanate groups and at least one β-hydroxyalkyl ester group or at least one carbalkoxymethyl ester group to give an intermediate having terminal isocyanate groups, and reacting these isocyanate groups with a primary or secondary amine, a ketimine or aldimine, which has a hydrogen atom on the nitrogen atom or an aminoalcohol blocked on the nitrogen atom.

16. A substrate provided with a coating, produced by a process as claimed in claims 11 to 15.